# EUROPEAN PATENT SPECIFICATION

(11) **EP 3 727 892 B1**
(45) Date of publication and mention of the grant of the patent: **19.05.2021**
(21) Application number: 18833536.8
(22) Date of filing: 18.12.2018
(51) Int. Cl.: B60C 11/03, B60C 11/12

(54) **TREAD COMPONENT**
LAUFFLÄCHENKOMPONENTE
COMPOSANT DE BANDE DE ROULEMENT

(30) Priority: 22.12.2017 IT 201700149345
(43) Date of publication of application: 28.10.2020
(73) Proprietor: Bridgestone Europe NV/SA, 1932 Zaventem (BE)
(72) Inventor: SPARACINO, Andrea, 00128 Roma (IT); SANTANGELI, Fabio, 00128 Roma (IT); DE LIDDO, Marco, 00128 Roma (IT)
(74) Representative: Marchetti, Alessio
(86) International application number: PCT/IB2018/060289
(87) International publication number: WO 2019/123279

(56) References cited:
- EP-A1- 0 722 852
- EP-A1- 2 913 205
- US-A1- 2014 326 381

## Description

### Technical field of the invention

The present invention refers to a tread component and a tread for pneumatic tyres. In particular, it refers to a tread for an all season (four seasons) pneumatic tyre, whose shape makes it particularly effective with any surface condition: dry, wet or snow-covered.

### Background

It is known that pneumatic tyres, especially for cars, are designed according to the use for which they are intended, and as a function of the environmental conditions wherein they are to be used.

Hence, on the one hand, there are so-called summer pneumatic tyres, which are particularly high-performing at high temperatures on average, whose compounds and geometry are well suited for contact with a hot and dry road surface, on the other hand there are so-called winter pneumatic tyres, which are particularly high-performing at low temperatures on average, whose compounds and geometry are well suited for contact with cold and possibly wet or snow-covered surfaces.

It is also known that in order to obtain good performance from a pneumatic tyre under - in one way or another - extreme conditions, technical (form and/or physical/chemical) characteristics are also required that are substantially exaggerated and therefore such that they are not able to satisfy the user under conditions that differ greatly from those for which the pneumatic tyre has been designed. In other words, a snow pneumatic tyre cannot be high-performing in summer on very hot and dry surfaces, just as a summer pneumatic tyre cannot be usefully used in winter on snow-covered surfaces.

This is because, essentially, the characteristics of the form and the type of compounds that a pneumatic tyre must have in order to perform well during the summer are often incompatible with those that a pneumatic tyre must have in order to perform well during the winter.

Over time therefore pneumatic tyres have been developed that can represent a compromise in terms of performance and that can be used throughout the year with good results. This category of pneumatic tyres is called "all season" (or "four seasons"). It is to be understood however that under extreme conditions, precisely because it is the result of a compromise in terms of efficiency, a four seasons pneumatic tyre cannot replace a seasonal pneumatic tyre (either winter or summer). For this reason, four seasons pneumatic tyres are to be considered as such mainly where the climate is such that there are no extreme variations between the four climatic seasons.

It is also clear that in order to also address market based problems, four seasons pneumatic tyres cannot be designed that, for performance reasons, degrade too quickly due to "summer" use. The problem is therefore strongly felt of being able to optimize the winter performance of a four seasons pneumatic tyre, without affecting the behavior thereof on hot and dry surfaces.

Furthermore, the same winter use of a pneumatic tyre poses problems due to the different conditions wherein the pneumatic tyre can be used. For example, different behavior and performance are required in the case of wet surfaces (for example due to rain) compared to snow-covered surfaces and again compared to icy surfaces.

In fact, in the case of a wet surface, one of the most important features is the ability to drain the water present between the surface and the tread (for example, to prevent/limit aquaplaning phenomena).

For this purpose, the shape of the tread must be such to create channels that are suitable for the rapid outflow of water, both in the direction of travel, and transversely to this. To this end, the elements of the tread must be shaped and positioned in a suitable manner.

By contrast, the shape and/or the positioning of the tread elements must be different in the case wherein the behavior of the pneumatic tyre on snow is to be optimized. In this case, those forms and/or positions which retain snow between the blocks, thereby increasing the grip of the tread on the ground, should be given priority.

The two configurations tend towards opposing designs and positioning for the tread elements and therefore, today, a pneumatic tyre that has a tread design that is optimal both on wet and snow-covered surfaces, does not exist.

EP2913205 discloses a pneumatic tyre having a plurality of sipes formed in land portions of a tread thereof so as to each extend in the tire width direction wherein in a cross section of the land portion orthogonal to the sipe extending direction, provided that an imaginary sipe main line links two ends in the tire radial direction of each sipe, at least two of the sipes are "inclined sipes" each having the sipe main line inclined with respect to the tire radial direction; each inclined sipe has inner bent portions each protruding with respect to the sipe main line with peaks positioned deeper than 20% of the sipe depth; and the sipe main line(s) of at least one of the inclined sipes are inclined in a direction opposite, with respect to the tire radial direction, to the sipe main line of any of the other inclined sipes.

US2014/326381 discloses a pneumatic tyre wherein the blocks above the circumferential reinforcing layer have at least one sipe. Also, the sipe has a bent shape, in a plan view, with two flex points P1, P2, and has a closed structure with two end points Q1, Q2 terminating within the block. Also, the angle α between the line that connects the flex points P1, P2 and the tyre circumferential direction is within the range such that 0°≦/α≦/10°. Also, the angle β1 between the line connecting the flex point P1 and the end point Q1 and the tire circumferential direction, and the angle β2 between the line connecting the flex point P2 and the end point Q2 and the tire circumferential direction are within the range such that 35 °≦/β1≦/55° and 35°≦/β2≦/55°.

EP0722852 discloses a pneumatic tyre having improved wet traction has an annular aquachannel center groove and curved lateral grooves which direct water from the footprint to the shoulder area of the tire to help prevent hydroplaning. The lugs contain sipes which change direction within the lug and tie bars in the sipes near each point where the sipes change direction. Siping, and the positioning of tie bars, provide means for minimizing the difference of the principal direction of lug stiffness between individual lugs. Also, the tyre has 4 pitch ratios which are distributed around the tyre so that extra large pitches are not located next to small pitches.

For the purposes of the present invention, the term "tread element" refers to a portion of the tread pattern that is repeated, identical to itself, along the entire length of the tread.

The term "tread component", or simply "component", refers to any tread block, or else a rib of the tread, regardless of the form and/or positioning thereof.

The term "contact surface" refers to that portion of a surface of a component that, during the rolling of the pneumatic tyre, comes into contact with the ground.

The term "groove" refers to the tread portion that separates two adjacent components.

The term "grooved channel", or simply "channel", refers to the inner portion of a groove, generally recessed in relation to the contact surface of the adjacent components.

The term "sipe" refers to a thin and generally narrow groove on a tread component, obtained by the molding of the pneumatic tyre, that is intended to improve the performance of the pneumatic tyre on wet and/or snow-covered surfaces.

### Summary of the invention

The technical problem addressed and resolved by the present invention is therefore that of providing a tread having a design that is such to represent the best possible compromise and to therefore enable effective use of the pneumatic tyre throughout the entire year, and in particular both under wet and snow-covered surface conditions, especially when braking.

This is achieved by means of a tread component as defined in claim 1.

A further object of the present invention is a tread for an all season pneumatic tyre as defined in claim 13.

A further object of the present invention is an all season pneumatic tyre as defined in claim 15.

Further characteristics of the present invention are defined in the corresponding dependent claims.

### Brief description of the figures

The advantages, together with the characteristics and the way of usage of the present invention, will become clear from the following detailed description of its preferred embodiments given purely by way of non-limiting example.

Reference will be made to the figures of the accompanying drawings, wherein:
- Figure 1 is a plan view of some tread components according to the present invention;
- Figure 2 is a top view of a portion of a tread according to the invention;
- Figure 3 is a side view of a first lamina for the implementation of a first sipe according to the present invention;
- Figure 3A is a plan view of the first lamina;
- Figure 4 is a side view of a second lamina for the implementation of a second sipe according to the present invention;
- Figure 4A is a plan view of the first lamina;

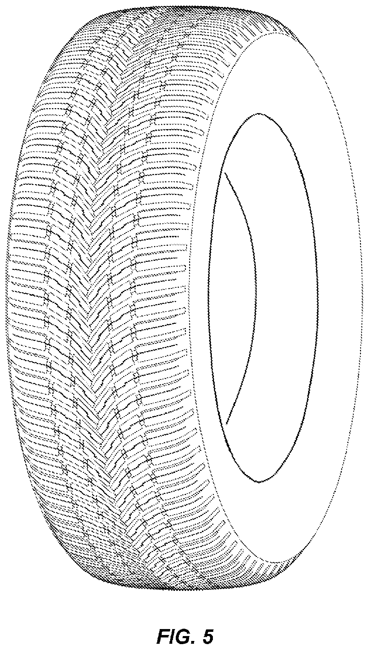

- Figure 5 is a perspective view of a pneumatic tyre according to the present invention;
- Figures 6 to 9 are graphs showing the trend of the tread performance of the tread under condition of a wet and/or snow-covered surface, in varying the shape of the sipes.

### Detailed description of embodiments of the invention

Some embodiments of the present invention will be described below, making reference to the above figures.

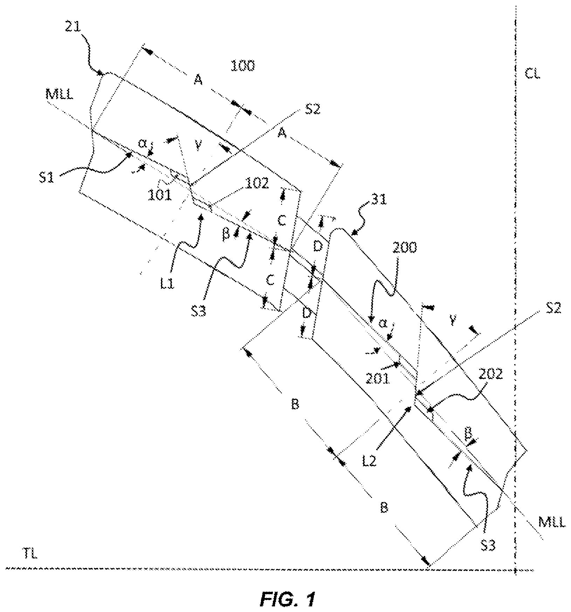

With initial reference to Figure 1, this shows, from above, some of the tread components 21, 31 according to a first embodiment of the present invention.

In particular, a tread component 21, 31 according to the present invention comprises a sipe 100, 200 such to reproduce a broken line on the contact surface thereof.

According to one embodiment, the broken line constitutes three consecutive segments S1, S2, S3, respectively inclined with respect to a longitudinal median line MLL of the same component.

"Median line MLL" refers to a straight line which passes through the component longitudinally, preferably substantially transversely dividing it in half.

Preferably, the three segments S1, S2, S3 of the broken line L1, L2 comprise an outer segment S1 inclined by an angle α with respect to the longitudinal median line MLL and an inner segment S3 inclined by an angle β with respect to the longitudinal median line MLL. Preferably, the angles α and β are alternate interior angles.

According to some embodiments, the angle α is between about 4° and about 6°, preferably equal to about 5°. According to other embodiments, the angle α is between about -4° and about -6°, preferably equal to about -5°.

According to some embodiments, the angle β is equal to -α.

Moreover, according to some embodiments, the three segments of the broken line comprise a central segment S2 inclined by about 35°-55°, preferably of about 45° with respect to said longitudinal median line MLL.

Advantageously, the shape of the sipe may be such that the central segment S2 and the median line MLL intersect at the respective midpoints thereof. In this way, the sipe is arranged symmetrically with respect to the component that contains it.

According to some embodiments, the sipe 100, 200 further comprises at least a pocket region 101, 102, 201, 202, formed at the ends of two consecutive segments.

In particular, the pocket region 101, 102 can be preferably implemented laterally to one of said inner S3 or outer S1 segments, on the side facing the longitudinal median line MLL.

Of course, embodiments may be provided for that do not have pocket regions, or that provide for a single pocket region for each sipe, or else that provide for two thereof. It is to be understood that each of the sipes may or may not include one or two pocket regions.

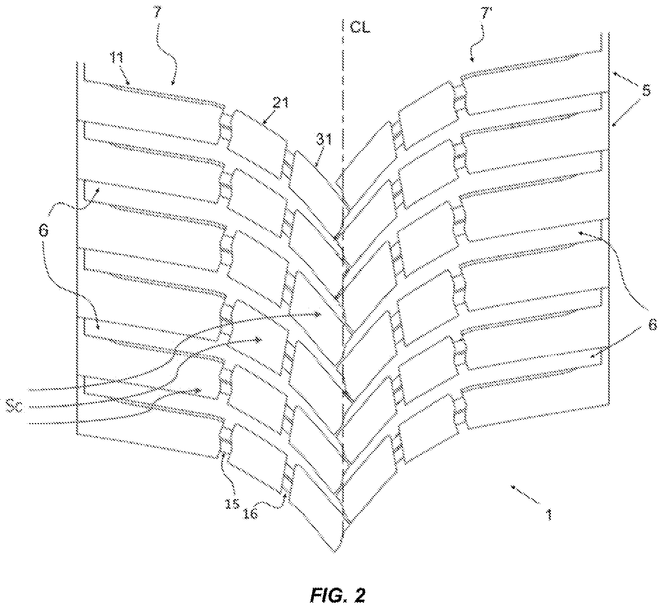

With reference to Figure 2, a tread 1 according to the present invention, preferably applicable to a four-seasons type pneumatic tyre, comprises a sequence of tread elements 5 arranged in succession and interspersed with first grooves 6.

Each tread element 5 has an overall "V" shape with two lateral wings 7, 7'.

Each of said lateral wings 7, 7' is formed from three tread blocks 11, 21, 31, separated by second grooves 15, 16, each of which has a respective contact surface Sc. The three blocks have a shoulder block 11, a median block 21 and a central block 31.

According to the present invention, at least one of the three tread components 11, 21, 31 is a component as heretofore described, preferably such at least one component is between the median block 21 and the central block 31.

In order to ensure the desired best result in terms of performance both on wet surfaces and on snow-covered surfaces, a further parameter that can be taken into consideration is the overall structural rigidity of the single block.

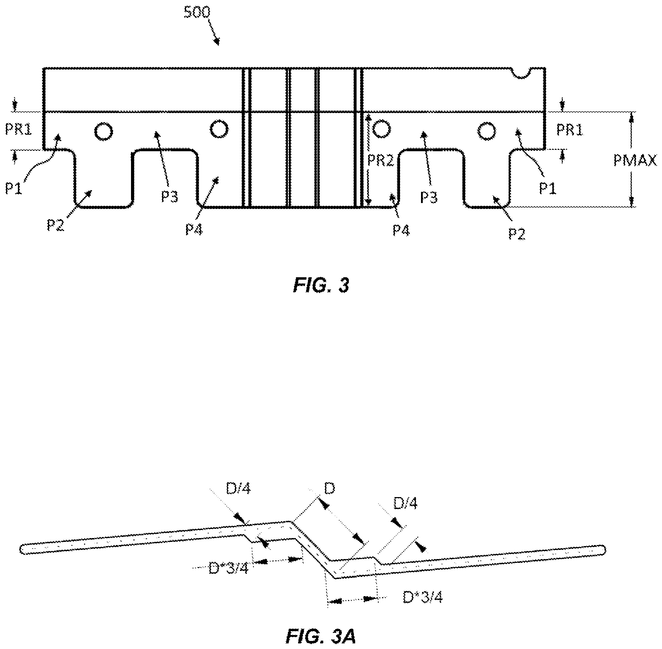

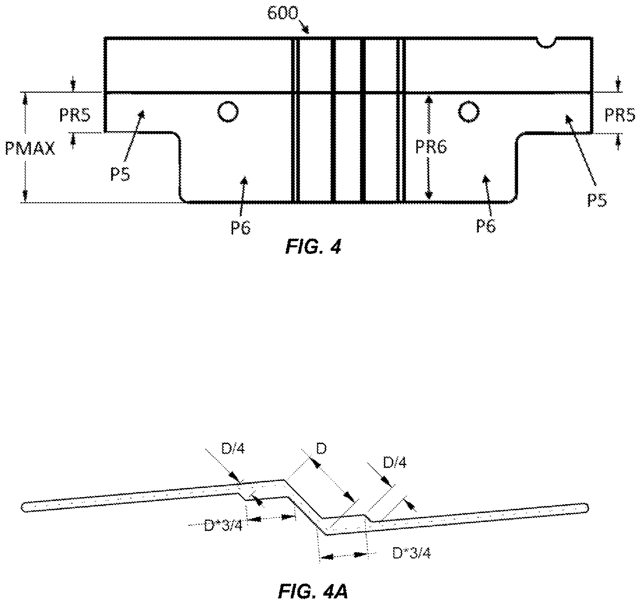

With reference to Figures 3, 3A, 4 and 4A, these show, respectively, a first lamina 500 and a second lamina 600, that can be used for the implementation of the tread according to the present invention. From the figures it can be seen how, in order to obtain optimal behavior, each sipe 100, 200 may comprise two or more sipe portions P1, P2, P3, P4 having respective differing depths, in relation to a maximum overall depth PMAX of the sipe 100.

In particular, for each sipe, sipe portions P1, P2, P3, P4 of different depths may be provided for on at least one of the consecutive segments S1, S2, S3. Preferably, these portions are provided, symmetrically identical to each other, on each of the inner S1 and outer S3 segments of each sipe 100, 200.

The geometry of these sipe portions has been defined by selecting measurements that are such to enable the best possible performance.

Advantageously, at least a first sipe portion has, with respect to the contact surface Sc, a first depth of between 40% and 70% of the maximum depth PMAX, preferably about 65%, and at least a second sipe portion has, with respect to the contact surface Sc, a second depth of between 70% and 100% of the maximum depth PMAX, preferably 100%.

By way of example, preferred embodiments could provide for a maximum depth of between 4 mm and 6.5 mm.

By way of example, Figures 3 and 3A show a first lamina 500 that can be used, according to one embodiment of the present invention, in order to obtain a sipe 100 on the median block 21 of the tread.

The first lamina 500 is shaped in such a manner that the resulting sipe 100 presents in succession, on each of the outer and inner segments, portions P1, P2, P3, P4 at differing depths. In particular, according to the exemplary embodiment shown, two portions P1 and P3 are provided for, the first depth PR1 (measured from the contact surface Sc) thereof being between about 40% and 70% of the maximum depth PMAX, for example with a maximum depth PMAX equal to 5.6 mm, a possible PR1 measurement is about 3.6 mm. As an alternative to these, two portions P2, P4 are provided for wherein the second depth PR2 thereof (measured from the contact surface Sc) ranges between 70% and 100% of PMAX. For example, for a maximum depth PMAX equal to about 5.6 mm, a possible PR2 measurement is about 5.6 mm.

Figures 4 and 4A refer instead to a second lamina 600, that can be used for example in order to implement the sipe 200 in the central block 31 of the tread.

In this case, according to the exemplary embodiment shown, on each of the outer and inner segments of the sipe, a portion P5 is provided for, the first depth PR5 thereof (measured from the contact surface Sc) being between about 40% and 70% of the maximum depth PMAX, for example with a maximum depth PMAX equal to 5.6 mm, a possible PR5 measurement is about 3.6 mm.

Furthermore, a portion P6 is provided for wherein the second depth thereof (measured from the contact surface Sc) ranges between 70% and 100% of PMAX. For example, for a maximum depth PMAX equal to about 5.6 mm, a possible PR6 measurement is about 5.6 mm.

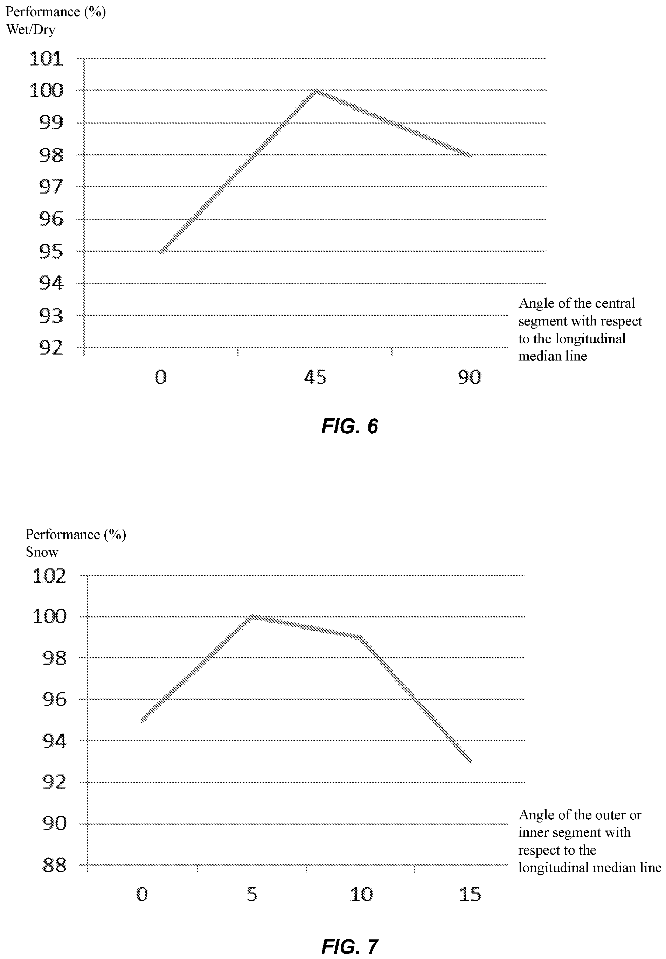

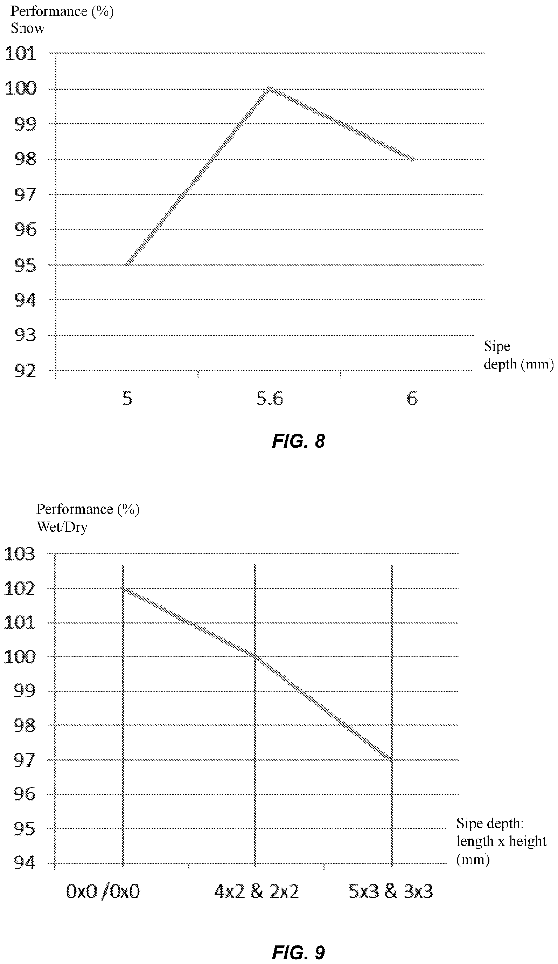

Finally, Figures 6 to 9 show graphs wherein parameters are listed that are indicative of the performance of a pneumatic tyre equipped with a tread according to the present invention. In particular, the trends of these parameters are shown in relation to the variation of some geometrical characteristics of the sipes 100, 200.

The present invention has heretofore been described with reference to the preferred embodiments thereof. It is intended that each of the technical solutions implemented in the preferred embodiments described herein by way of example can advantageously be combined in different ways between them, in order to give form to other embodiments, as long as all fall within the scope of protection afforded by the claims recited hereinafter.

## Claims

1. Tread component (11, 21, 31), comprising a sipe (100, 200) that is such to reproduce a broken line on the contact surface (Sc) of said tread component (11, 21, 31), said broken line consisting of three consecutive segments (S1, S2, S3) formed by an inner segment (S3), a central segment (S2) and an outer segment (S1), respectively inclined with respect to a longitudinal median line (MLL) of said component (21, 31), said longitudinal median line (MLL) being a straight line that runs longitudinally along said component (11, 21, 31) preferably subdividing it substantially at the middle in the transverse direction,
**characterized in that** said sipe (100, 200) further comprises at least a pocket region (101, 102, 201. 202) at the ends of two consecutive segments (S1, S2, S3),
wherein said three consecutive segments (S1, S2, S3) of the broken line comprise a central segment (S2) inclined by about 35°-55°with respect to said longitudinal median line (MLL), said central segment (S2) and said longitudinal median line (MLL) intersect at the respective midpoints thereof said sipe (100, 200) comprising two pocket regions (101, 102, 201, 202), each implemented laterally to one of said inner (S3) and outer (S1) segments, on the side facing said longitudinal median line (MLL).

2. Tread component (11, 21, 31) according to claim 1, wherein said three consecutive segments (S1, S2, S3) of the broken line comprise an outer segment (S1) inclined by a first angle (α) with respect to said longitudinal median line (MLL) and an inner segment (S3) inclined by a second angle (β) with respect to said longitudinal median line (MLL).

3. Tread component (11, 21, 31) according to claim 2, wherein said outer segment (S1) is inclined in one direction by said first angle (α) with respect to said longitudinal median line (MLL) and said inner segment (S3) is inclined in the opposite direction by said second angle (β) with respect to said longitudinal median line (MLL).

4. Tread component (11, 21, 31) according to claim 2 or 3, wherein said first angle (α) is between ±4° and ±6° and said first angle (α) is equal to approximately ±5°.

5. Tread component (11, 21, 31) according to one of claims 2 to 4, wherein said second angle (β) is equal to said first angle (α).

6. Tread component (11, 21, 31) according to one of claims 1 to 5, wherein said central segment (S2) is inclined by about 45° with respect to said longitudinal median line (MLL).

7. Tread component (11, 21, 31) according to one of claims 1 to 6, wherein said at least a pocket region (101, 102, 201, 202) is implemented laterally to one of said inner (S3) or outer (S1) segments, on the side facing said longitudinal median line (MLL).

8. Tread component (11, 21, 31) according to one of the preceding claims, wherein said sipe (100, 200) comprises at least two sipe portions (P1, P2, P3, P4; P5, P6) of differing depths.

9. Tread component (11, 21, 31) according to claim 8, , wherein said at least two sipe portions (P1, P2, P3, P4; P5, P6) of differing depths comprise at least a first sipe portion (P1, P3; P5) having, with respect to the contact surface (Sc), a first sipe depth (PR1; PR5) between about 40% and 70% of a maximum depth (PMAX) and at least a second sipe portion (P2, P4; P6) having, with respect to the contact surface (Sc), a second sipe depth (PR2; PR6) between about 70% and 100% of a maximum depth (PMAX).

10. Tread component (11, 21, 31) according to claim 9, wherein said maximum depth (PMAX) is equal to about 5.6 mm.

11. Tread component (11, 21, 31) according to claim 10, wherein said first sipe depth (PR1, PR5) is equal to about 3.6 mm.

12. Tread component (11, 21, 31) according to claim 10 or 11, wherein said second sipe depth (PR2; PR6) is equal to about 5.6 mm.

13. Tread (1) for an all season pneumatic tyre , comprising a sequence of tread elements (5) arranged in succession and interspersed with first grooves (6), each tread element (5) having an overall "V" shape with two lateral wings (7, 7'), each of said lateral wings (7, 7') being formed from three tread components (11, 21, 31) each according to one of the claims from 1 to 12, separated by second grooves (15, 16) and having a contact surface (Sc).

14. Pneumatic tyre (100), comprising a tread having at least a tread component according to any of the preceding claims from 1 to 12.

15. All season pneumatic tyre (100), comprising a tread (1) according to claim 13.

## Patentansprüche

1. Laufflächenkomponente (11, 21, 31), umfassend eine Lamelle (100, 200), die derart ist, dass sie eine unterbrochene Linie auf der Kontaktfläche (Sc) der Laufflächenkomponente (11, 21, 31) reproduziert, wobei die unterbrochene Linie aus drei aufeinanderfolgenden Segmenten (S1, S2, S3) besteht, die von einem inneren Segment (S3), einem mittleren Segment (S2) und einem äußeren Segment (S1) gebildet werden, die jeweils in Bezug auf eine Längsmittellinie (MLL) der Komponente (21, 31) geneigt sind, wobei die Längsmittellinie (MLL) eine gerade Linie ist, die in Längsrichtung entlang der Komponente (11, 21, 31) verläuft und sie vorzugsweise im Wesentlichen in der Mitte in der Querrichtung unterteilt,
**dadurch gekennzeichnet, dass**
die Lamelle (100, 200) ferner mindestens einen Taschenbereich (101, 102, 201, 202) am Ende der beiden aufeinanderfolgenden Segmente (S1, S2, S3) umfasst,
wobei die drei aufeinanderfolgenden Segmente (S1, S2, S3) der unterbrochenen Linie ein zentrales Segment (S2) umfassen, das um etwa 35°-55° in Bezug auf die längs verlaufende Mittellinie (MLL) geneigt ist, wobei sich das zentrale Segment (S2) und die längs verlaufende Mittellinie (MLL) an ihren jeweiligen Mittelpunkten schneiden, wobei die Lamelle (100, 200) zwei Taschenbereiche (101, 102, 201, 202) umfasst, die jeweils seitlich zu einem der inneren (S3) und äußeren (S1) Segmente auf der der längs verlaufenden Mittellinie (MLL) zugewandten Seite implementiert sind.

2. Laufflächenkomponente (11, 21, 31) nach Anspruch 1, wobei die drei aufeinanderfolgenden Segmente (S1, S2, S3) der unterbrochenen Linie ein äußeres Segment (S1) umfassen, das um einen ersten Winkel (α) in Bezug auf die Längsmittellinie (MLL) geneigt ist, und ein inneres Segment (S3), das um einen zweiten Winkel (β) in Bezug auf die Längsmittellinie (MLL) geneigt ist.

3. Laufflächenkomponente (11, 21, 31) nach Anspruch 2, wobei das äußere Segment (S1) in einer Richtung um den ersten Winkel (α) in Bezug auf die Längsmittellinie (MLL) geneigt ist und das innere Segment (S3) in der entgegengesetzten Richtung um den zweiten Winkel (β) in Bezug auf die Längsmittellinie (MLL) geneigt ist.

4. Laufflächenkomponente (11, 21, 31) nach Anspruch 2 oder 3, wobei der erste Winkel (α) zwischen ±4° und ±6° liegt und der erste Winkel (α) etwa ±5° entspricht.

5. Laufflächenkomponente (11, 21, 31) nach einem der Ansprüche 2 bis 4, wobei der zweite Winkel (β) gleich dem ersten Winkel (α) ist.

6. Laufflächenkomponente (11, 21, 31) nach einem der Ansprüche 1 bis 5, wobei das mittlere Segment (S2) um etwa 45° in Bezug auf die Längsmittellinie (MLL) geneigt ist.

7. Laufflächenkomponente (11, 21, 31) nach einem der Ansprüche 1 bis 6, wobei der mindestens eine Taschenbereich (101, 102, 201, 202) seitlich von einem der inneren (S3) oder äußeren (S1) Segmente auf der der Längsmittellinie (MLL) zugewandten Seite ausgebildet ist.

8. Laufflächenkomponente (11, 21, 31) nach einem der vorhergehenden Ansprüche, wobei die Lamelle (100, 200) mindestens zwei Lamellenabschnitte (P1, P2, P3, P4; P5, P6) mit unterschiedlichen Tiefen umfasst.

9. Laufflächenkomponente (11, 21, 31) nach Anspruch 8, wobei die mindestens zwei Lamellenabschnitte (P1, P2, P3, P4; P5, P6) unterschiedlicher Tiefe mindestens einen ersten Lamellenabschnitt (P1, P3; P5) umfassen, der in Bezug auf die Kontaktfläche (Sc) eine erste Lamellentiefe (PR1; PR5) zwischen etwa 40 % und 70 % einer maximalen Tiefe (PMAX) aufweist, und mindestens einen zweiten Lamellenabschnitt (P2, P4; P6), der in Bezug auf die Kontaktfläche (Sc) eine zweite Lamellentiefe (PR2; PR6) zwischen etwa 70 % und 100 % einer maximalen Tiefe (PMAX) aufweist.

10. Laufflächenkomponente (11, 21, 31) nach Anspruch 9, wobei die maximale Tiefe (PMAX) gleich etwa 5,6 mm ist.

11. Laufflächenkomponente (11, 21, 31) nach Anspruch 10, wobei die erste Lamellentiefe (PR1, PR5) gleich etwa 3,6 mm ist.

12. Laufflächenkomponente (11, 21, 31) nach Anspruch 10 oder 11, wobei die zweite Lamellentiefe (PR2; PR6) gleich etwa 5,6 mm ist.

13. Lauffläche (1) für einen Ganzjahresluftreifen, umfassend eine Sequenz von Laufflächenelementen (5), die aufeinanderfolgend angeordnet und mit ersten Rillen (6) durchsetzt sind, wobei jedes Laufflächenelement (5) insgesamt eine "V"-Form mit zwei Seitenflügeln (7, 7') aufweist, wobei jeder der Seitenflügel (7, 7') aus drei Laufflächenkomponenten (11, 21, 31) jeweils nach einem der Ansprüche 1 bis 12 ausgebildet ist, die durch zweite Rillen (15, 16) getrennt sind und eine Kontaktfläche (Sc) aufweisen.

14. Luftreifen (100), umfassend eine Lauffläche, die mindestens eine Laufflächenkomponente nach einem der vorhergehenden Ansprüche von 1 bis 12 aufweist.

15. Ganzjahresluftreifen (100), umfassend eine Lauffläche (1) nach Anspruch 13.

## Revendications

1. Composant de bande de roulement (11, 21, 31), comprenant une rainure (100, 200) telle qu'elle reproduise une ligne brisée sur la surface de contact (Sc) dudit composant de bande de roulement (11, 21, 31), ladite ligne brisée étant constituée de trois segments consécutifs (S1, S2, S3) formés par un segment intérieur (S3), un segment central (S2) et un segment extérieur (S1), respectivement inclinés par rapport à une ligne médiane longitudinale (MLL) dudit composant (21, 31), ladite ligne médiane longitudinale (MLL) étant une ligne droite qui s'étend de manière longitudinale le long dudit composant (11, 21, 31) de préférence en le subdivisant essentiellement au centre dans la direction transversale,
**caractérisé en ce que**
ladite rainure (100, 200) comprend en outre au moins une région de poche (101, 102, 201, 202) aux extrémités de deux segments consécutifs (S1, S2, S3),
dans lequel lesdits trois segments consécutifs (S1, S2, S3) de la ligne brisée comprennent un segment central (S2) incliné d'environ 35°-55° par rapport à ladite ligne médiane longitudinale (MLL), ledit segment central (S2) et ladite ligne médiane longitudinale (MLL) se croisent en leur points centraux respectifs, ladite rainure (100, 200) comprenant deux régions de poche (101, 102, 201, 202), chacune appliquée latéralement à l'un desdits segments intérieur (S3) et extérieur (S1), sur le côté faisant face à ladite ligne médiane longitudinale (MLL).

2. Composant de bande de roulement (11, 21, 31) selon la revendication 1, dans lequel lesdits trois segments consécutifs (S1, S2, S3) de la ligne brisée comprennent un segment extérieur (S1) incliné d'un premier angle (α) par rapport à ladite ligne médiane longitudinale (MLL) et un segment intérieur (S3) incliné d'un deuxième angle (β) par rapport à ladite ligne médiane longitudinale (MLL).

3. Composant de bande de roulement (11, 21, 31) selon la revendication 2, dans lequel ledit segment extérieur (S1) est incliné dans une direction par ledit premier angle (α) par rapport à ladite ligne médiane longitudinale (MLL) et ledit segment intérieur (S3) est incliné dans la direction opposée par ledit deuxième angle (β) par rapport à ladite ligne médiane longitudinale (MLL).

4. Composant de bande de roulement (11, 21, 31) selon la revendication 2 ou 3, dans lequel ledit premier angle (α) est compris entre ± 4° et ± 6° et ledit premier angle (α) est égal à environ ± 5°.

5. Composant de bande de roulement (11, 21, 31) selon l'une des revendications 2 à 4, dans lequel ledit deuxième angle (β) est égal audit premier angle (α).

6. Composant de bande de roulement (11, 21, 31) selon l'une des revendications 1 à 5, dans lequel ledit segment central (S2) est incliné d'environ 45° par rapport à ladite ligne médiane longitudinale (MLL).

7. Composant de bande de roulement (11, 21, 31) selon l'une des revendications 1 à 6, dans lequel ladite au moins une région de poche (101, 102, 201, 202) est appliquée latéralement sur l'un desdits segments intérieur (S3) ou extérieur (S1), sur le côté faisant face à ladite ligne médiane longitudinale (MLL).

8. Composant de bande de roulement (11, 21, 31) selon l'une des revendications précédentes, dans lequel ladite rainure (100, 200) comprend au moins deux parties de rainure (P1, P2, P3, P4 ; P5, P6) de profondeurs différentes.

9. Composant de bande de roulement (11, 21, 31) selon la revendication 8, dans lequel lesdites au moins deux parties de rainure (P1, P2, P3, P4 ; P5, P6) de différentes profondeurs comprennent au moins une première partie de rainure (P1, P3 ; P5) présentant, par rapport à la surface de contact (Sc), une première profondeur de rainure (PR1 ; PR5) entre environ 40 % et 70 % d'une profondeur maximale (PMAX) et au moins une deuxième partie de rainure (P2, P4 ; P6) présentant, par rapport à la surface de contact (Sc), une deuxième profondeur de rainure (PR2 ; PR6) entre environ 70 % et 100 % d'une profondeur maximale (PMAX).

10. Composant de bande de roulement (11, 21, 31) selon la revendication 9, dans lequel ladite profondeur maximale (PMAX) est égale à environ 5,6 mm.

11. Composant de bande de roulement (11, 21, 31) selon la revendication 10, dans lequel ladite première profondeur de rainure (PR1, PR5) est égale à environ 3,6 mm.

12. Composant de bande de roulement (11, 21, 31) selon la revendication 10 ou 11, dans lequel ladite deuxième profondeur de rainure (PR2 ; PR6) est égale à environ 5,6 mm.

13. Bande de roulement (1) pour pneumatique toutes saisons, comprenant une séquence d'éléments de bande de roulement (5) disposés successivement et entremêlés avec des premières cannelures (6), chaque élément de bande de roulement (5) possédant une forme globale en « V » avec deux ailettes latérales (7, 7'), chacune desdites ailettes latérales (7, 7') étant formée à partir de trois composants de bande de roulement (11, 21, 31) chacun selon l'une des revendications 1 à 12, séparés par des deuxièmes cannelures (15, 16) et possédant une surface de contact (Sc).

14. Pneumatique (100), comprenant une bande de roulement dotée d'au moins un composant de bande de roulement selon l'une quelconque des revendications précédentes 1 à 12.

15. Pneumatique toutes saisons (100), comprenant une bande de roulement (1) selon la revendication 13.
